# EUROPÄISCHE PATENTSCHRIFT

(11) **EP 3 557 011 B1**
(45) Veröffentlichungstag und Bekanntmachung des Hinweises auf die Patenterteilung: **10.03.2021**
(21) Anmeldenummer: 19167060.3
(22) Anmeldetag: 03.04.2019
(51) Int. Cl.: F16C 35/02, F01L 1/047, F16C 17/04

(54) **LAGERRAHMEN ODER ZYLINDERKOPFHAUBE EINER BRENNKRAFTMASCHINE**
BEARING FRAME OR CYLINDER HEAD COVER FOR A COMBUSTION ENGINE
CADRE DE ROULEMENT OU COUVERCLE DE CULASSE D'UN MOTEUR À COMBUSTION INTERNE

(30) Priorität: 19.04.2018 DE 102018205982
(43) Veröffentlichungstag der Anmeldung: 23.10.2019
(73) Patentinhaber: Mahle International GmbH, 70376 Stuttgart (DE)
(72) Erfinder: MENONNA, Antonio, 71254 Ditzingen (DE)
(74) Vertreter: BRP Renaud & Partner mbB Rechtsanwälte Patentanwälte Steuerberater

(56) Entgegenhaltungen:
- EP-A1- 1 936 131
- DE-A1-102013 205 129
- GB-A- 2 378 484
- JP-U- H0 524 901
- JP-U- S60 102 521

## Beschreibung

Die vorliegende Erfindung betrifft einen Lagerrahmen oder eine Zylinderkopfhaube einer Brennkraftmaschine mit wenigstens einer Nockenwelle gemäß dem Oberbegriff des Anspruchs 1. Die Erfindung betrifft außerdem eine Brennkraftmaschine sowie ein Verfahren zur Montage einer derartigen Nockenwelle.

Nockenwellen werden zur Betätigung von Ein- und Auslassventilen bei Brennkraftmaschinen benötigt, wobei aufgrund der Komplexität moderner Nockenwellen deren Zusammenbau und Montage in einer Brennkraftmaschine zunehmend schwieriger wird.

Aus der DE 103 31 089 A1 ist eine gattungsgemäße Zylinderkopfhaube für eine Brennkraftmaschine mit wenigstens einer Nockenwelle bekannt, die durch wenigstens eine Lagerbrücke entlang einer Lagergasse für die Nockenwelle in der Zylinderkopfhaube hindurchragt, wobei die Lagerbrücke eine Öffnung bzw. Bohrung aufweist, die die Nockenwelle vollständig umschließt.

Aus der DE 10 2007 014 544 A1 ist eine Brennkraftmaschine mit mindestens einer Nockenwelle bekannt, die zur Bildung eines Axiallagers mindestens ein Anschlagelement aufweist, das zur axialen Lagerung mit einem Lagerrahmen des Axiallagers zusammenwirkt. Das Anschlagelement ist dabei von einem Nocken der Nockenwelle gebildet und der Lagerrahmen weist zudem einen Freiraum für die Nockenform des Nockens auf. Hierdurch kann eine Axiallagerung über einen Nocken erzielt werden.

Aus der DE 10 2009 031 455 A1 ist eine weitere Brennkraftmaschine mit einem Nockenwellensystem mit einer ersten Nockenwelle zur Steuerung von Gaswechselventilen der Brennkraftmaschine bekannt. Auf der Nockenwelle ist dabei ein Zahnrad drehfest angeordnet. Um nun eine möglichst einfache Axiallagerung der Nockenwelle realisieren zu können, weist ein Gehäuseteil der Brennkraftmaschine eine gehäuseinnere Ausnehmung auf, in der das Zahnrad umfänglich zumindest bereichsweise derart geführt ist, dass das Zahnrad zumindest mit Stirnflächenbereichen zu einer der beiden Seiten einander gegenüberliegenden Zahnradstirnflächen mit jeweils einem Seitenwandbereich jeweils einer Seitenwand der Ausnehmung zusammenwirkt. Das Zahnrad besitzt somit zwei Aufgaben, nämlich einerseits als Antriebselement und andererseits als Axiallager für die Nockenwelle.

Aus der DE 10 2009 049 218 A1 ist eine Nockenwelle einer Brennkraftmaschine mit wenigstens einer einteiligen Druckscheibe bekannt, die zwischen einem fest mit der Nockenwelle gefügten Antriebselement und einem ebenfalls fest mit der Nockenwelle gefügten Funktionselement angeordnet und zudem verliersicher fixiert ist.

Aus der DE 10 2013 205 129 A1 ist ein gattungsgemäßer Lagerrahmen oder eine Zylinderkopfhaube einer Brennkraftmaschine mit wenigstens einer darin gelagerten Nockenwelle bekannt, wobei die Nockenwelle in zumindest zwei entlang einer Lagergasse angeordneten Lageröffnungen tunnelgelagert ist, die die Nockenwelle vollständig umschließen.

Aus der JP H05 24901 U und der GB 2 378 484 A1 sind weitere Lagerrahmen bekannt.

Allen zuvor beschriebenen Lösungen zur Axiallagerung einer Nockenwelle in einer Brennkraftmaschine ist gemein, dass die komplette Nockenwelle in eine geteilte Lagerung, wie beispielsweise einen Lagerbock oder einen geteilten Zylinderkopf, eingelegt wird. Bei einem in einer Zylinderkopfhaube bzw. einem Lagerrahmen zusammengebauten Nockenwelle funktioniert dies nicht, so dass in diesem Fall das Axiallager üblicherweise durch ein Kugellager realisiert wird (vergleiche DE 103 31 089 A1). Ein derartiges Kugellager erfordert jedoch viel radialen Bauraum in der Zylinderkopfhaube bzw. dem Lagerrahmen, was dem Vorteil einer Zylinderkopfhaube, nämlich leicht und kompakt zu bauen, entgegenläuft. Auch die konventionelle Axiallagerung mittels Gleitlagerung, beispielsweise durch das Anfügen von zwei Bundnocken an zwei Gleitflächen im Gehäuse, erweist sich oft als problematisch, da für solche Nocken wenig Platz in der Zylinderkopfhaube zur Verfügung steht. Vor allem jedoch erweist sich das Halten des Nockens während der Montage als problematisch, da in der Regel nur einer der beiden Nocken in Einschubrichtung der Welle auf einer planen Fläche gut abgestützt gehalten werden kann.

Die vorliegende Erfindung beschäftigt sich daher mit dem Problem, für einen Lagerrahmen oder eine Zylinderkopfhaube der gattungsgemäßen Art eine verbesserte Ausführungsform anzugeben, die sich insbesondere durch eine verbesserte Axiallagerung der Nockenwelle auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, eine Nockenwelle in einer die Welle vollständig umschließende Lagergasse eines Lagerrahmens bzw. einer Zylinderkopfhaube einer Brennkraftmaschine zu lagern und dabei zugleich eine Axiallagerung der Nockenwelle ausschließlich an dieser Zylinderkopfhaube bzw. dem Lagerrahmen zu realisieren. Erfindungsgemäß weist hierzu der zuvor beschriebene Lagerrahmen bzw. die Zylinderkopfhaube, zumindest zwei entlang einer Lagergasse angeordnete Lageröffnungen auf, in welchen die Nockenwelle radial gelagert ist. Diese Lageröffnungen umschließen dabei die Nockenwelle und/oder ein Radiallager vollständig. Zusätzlich ist auf der Nockenwelle zumindest ein Wellenaxiallagerring angeordnet, der jedoch nicht als herkömmlicher Wellenring ausgebildet ist, sondern eine zum Lagerrahmen oder zur Zylinderkopfhaube hin offene Ringnut aufweist. Am Lagerrahmen bzw. an der Zylinderkopfhaube wiederum ist zumindest ein Eingriffselement angeordnet, das in die Ringnut eingreift und dadurch eine Axiallagerung der Welle ermöglicht. Hierdurch kann eine gebaute Nockenwelle in einer Tunnellagerung einer Zylinderkopfhaube bzw. einem Lagerrahmen zugleich in Axialrichtung gelagert werden, ohne dass hierfür aufwändige Kugellager erforderlich wären, die zudem viel radialen Bauraum erfordern. Das Eingriffselement ist als Stift ausgebildet und in dem Lagerrahmen oder in der Zylinderkopfhaube in einer den Stift aufnehmenden Hülse, angeordnet ist. Die Axiallagerung mit dem in der Zylinderkopfhaube bzw. in dem Lagerrahmen angeordneten Eingriffselement und dem auf der Nockenwelle angeordneten Wellenaxiallagerring erfordert darüber hinaus keinerlei Änderungen bei der Montage der gebauten Nockenwelle in der Zylinderkopfhaube bzw. dem Lagerrahmen, da der Wellenaxiallagerring lediglich ein weiteres Funktionselement, wie beispielsweise einen Nocken, auf die Nockenwelle gefügt wird. Von besonderem Vorteil bei der erfindungsgemäßen Axiallagerung ist darüber hinaus, dass diese auch in Axialrichtung der Nockenwelle vergleichsweise wenig Bauraum erfordert, was sich insbesondere im Vergleich zu bisher hierfür verwendeten Bundnocken mit Gleitflächen als großer Vorteil herausstellt. Von weiterem großen Vorteil ist die vergleichsweise einfache Montage der erfindungsgemäßen Nockenwelle in dem Lagerrahmen bzw. in der Zylinderkopfhaube, da diese lediglich in gewohnter Weise in die Lagergasse gefügt werden muss, wobei das Eingriffselement, beispielsweise ein Stift, auch anschließend noch durch eine entsprechende Öffnung in der Zylinderkopfhaube bzw. dem Lagerrahmen eingeführt und in Eingriff mit der Ringnut des Wellenaxiallagerrings gebracht werden kann. Dies stellt auch einen wesentlichen Vorteil zur DE 10 2013 205 129 A1 dar, bei welcher auf der Nockenwelle eine kreisförmige Axiallagerscheibe angeordnet war, welche in eine entsprechende Ausnehmung an der Zylinderkopfhaube bzw. am Lagerrahmen eingreifen musste.

Erfindungsgemäß ist das Eingriffselement als Stift ausgebildet. Bei einer nicht erfindungsgemäßen Ausführungsform ist das Eingriffselement als Schwert ausgebildet. Besonders die Ausbildung des Eingriffselements als Stift ermöglicht eine vereinfachte Montage, da - wie bereits zuvor beschrieben - die Nockenwelle lediglich in gewohnter Weise in die Lagergasse eingeschoben und anschließend der Stift durch eine entsprechende Öffnung in der Zylinderkopfhaube bzw. in dem Lagerrahmen eingesteckt und in Eingriff mit der Ringnut des Wellenaxiallagerrings gebracht werden kann. Der Vorteil eines Schwerts im Vergleich zu einem Stift liegt insbesondere in der größeren Axiallagerfläche, wodurch eine höhere Axiallagerkraft erreicht werden kann. Sowohl das Schwert als auch der Stift können dabei aus einem Material mit geringem Gleitreibungswiderstand ausgebildet sein, wodurch die Axiallagerung reibungsoptimiert ausgeführt werden kann. Erfindungsgemäß ist zudem in dem Lagerrahmen oder in der Zylinderkopfhaube eine den Stift aufnehmende Hülse angeordnet, wodurch selbst bei der Ausbildung der Zylinderkopfhaube bzw. des Lagerrahmens aus Kunststoff eine kriechfreie und dadurch zuverlässige Lagerung des Stiftes bzw. auch der Nockenwelle möglich ist.

Erfindungsgemäß sind der Lagerrahmen oder die Zylinderkopfhaube aus Kunststoff ausgebildet, was den großen Vorteil bietet, dass diese nicht nur gewichtsoptimiert, sondern auch qualitativ hochwertig und zugleich kostengünstig hergestellt werden können. Alternativ ist selbstverständlich bei einer nicht erfindungsgemäßen Ausführungsform auch denkbar, dass der Lagerrahmen oder die Zylinderkopfhaube aus Metall, beispielsweise aus Aluminium, ausgebildet sind. Auch hierdurch ist noch eine vergleichsweise gewichtsoptimierte Ausbildung möglich, jedoch mit im Vergleich zu Kunststoff deutlich erhöhten Steifigkeiten. Selbstverständlich ist auch vorstellbar, dass der Lagerrahmen aus Metall, beispielsweise aus Aluminium, ausgebildet ist und das Eingriffselement zur Axiallagerung der Nockenwelle aufnimmt, während eine den Lagerrahmen überdeckende Zylinderkopfhaube lediglich eine Abdeckfunktion übernimmt und dadurch aus leichtem und kostengünstigen Kunststoff ausgebildet sein kann.

Bei einer weiteren vorteilhaften Ausführungsform der erfindungsgemäßen Lösung weist das Eingriffselement einen Ölkanal auf, über welchen durch den Lagerrahmen bzw. die Zylinderkopfhaube und das jeweilige Eingriffselement Öl in die Ringnut des Wellenaxiallagerrings zuführbar ist. In diesem Fall kann beispielsweise das Eingriffselement als Hülse ausgebildet sein. Bei einer derartigen Ausbildung des Eingriffselements als Hülse kann durch diese eine erhöhte Funktionalität erreicht werden, da eine derartige Hülse nicht nur eine Axiallagerfunktion, sondern zugleich auch eine Schmierfunktion übernimmt. Über eine derartige Schmierung des Axiallagers können eine leichtgängige Axiallagerung der Nockenwelle erreicht und dadurch ein Reibungswiderstand gesenkt werden.

Zweckmäßig erfolgt eine Ölzuführung zur Schmierung des Wellenaxiallagerrings über die Nockenwelle, wobei ein Ölkanal in der Nockenwelle einen größeren Durchmesser aufweist als ein Ölkanal in dem Wellenaxiallagerring. Hierdurch lassen sich insbesondere etwaige Fügefehler beim Fügen, insbesondere beim thermischen Fügen, des Wellenaxiallagerrings auf der Nockenwelle kompensieren. Der Ölkanal in dem Wellenaxiallagerring steht dabei mit dem Ölkanal in der Nockenwelle kommunizierend in Verbindung und ermöglicht eine Schmierung der nach außen offenen Umfangs-/Ringnut, wodurch eine besonders leichtgängige Axiallagerung erreicht werden kann. Durch die Schmierung des Axiallagers über die Nockenwelle kann ein ohnehin üblicherweise in der Nockenwelle vorhandener Ölkanal, der beispielsweise zur Schmierung eines Ventiltriebes verwendet wird, zusätzlich zur Schmierung des Axiallagers genutzt werden. Hierzu ist lediglich eine Radialbohrung zwischen der Ringnut des Wellenaxiallagerrings und dem üblicherweise zentral angeordneten Ölkanal in der Nockenwelle durchzuführen. Bei einer vorteilhaften Weiterbildung der erfindungsgemäßen Lösung ist die Nockenwelle in Radialrichtung über zumindest ein zusätzliches Gleitlager gelagert.

Hierzu kann ein Gleitlagerring direkt auf der Nockenwelle positioniert werden, beispielsweise mittels eines thermischen Fügeverfahrens, der in einem entsprechenden Lagerauge des Lagerrahmens bzw. der Zylinderkopfhaube die Radiallagerfunktion übernimmt. Denkbar ist hierbei insbesondere der Einsatz einer den Reibungswiderstand reduzierenden Beschichtung auf dem Gleitlagerring oder eine Ausbildung desselben aus einem Material mit einem geringen Gleitreibungskoeffizienten. Auch hier kann die Radiallagerung leichtgängiger gestaltet werden, indem beispielsweise eine Schmierung des Radiallagers über einen Ölkanal in der Nockenwelle oder über einen Ölkanal im Lagerrahmen bzw. in der Zylinderkopfhaube erfolgt.

Die vorliegende Erfindung beruht weiter auf dem allgemeinen Gedanken, eine Brennkraftmaschine mit einem solchen Lagerrahmen bzw. einer solchen Zylinderkopfhaube auszustatten und dadurch die zuvor beschriebenen Vorteile in Bezug auf den Lagerrahmen bzw. die Zylinderkopfhaube auf die Brennkraftmaschine zu übertragen.

Die vorliegende Erfindung beruht weiter auf dem allgemeinen Gedanken, ein Verfahren zur Montage einer gebauten Nockenwelle in einem Lagerrahmen oder einer Zylinderkopfhaube aus Kunststoff anzugeben, bei dem mittels einer Haltevorrichtung der Lagerrahmen oder die Zylinderkopfhaube gehalten wird, und bei dem mittels einer Greifeinrichtung zu montierende Funktionselemente und der Wellenaxiallagerring gegriffen und mit ihren Durchgangsöffnungen koaxial zu entlang einer Lagergasse angeordneten Lageröffnungen des Lagerrahmens oder der Zylinderkopfhaube angeordnet und fixiert werden. Anschließend wird die beispielsweise gekühlte Welle durch die Lageröffnungen des Lagerrahmens oder der Zylinderkopfhaube und die Durchgangsöffnungen der beispielsweise erwärmten Funktionselemente und des Wellenaxiallagerrings geschoben, wobei der Wellenaxiallagerring eine zum Lagerrahmen oder zur Zylinderkopfhaube hin offene Ringnut aufweist, und so auf der Nockenwelle positioniert wird, dass die Ringnut im Wesentlichen in Radialrichtung mit einer Öffnung am Lagerrahmen oder an der Zylinderkopfhaube fluchtet. Hierdurch kann nach Wärmeausgleich ein thermischer Fügeverbund der Funktionsbauteile und des Wellenaxiallagerrings auf der Nockenwelle erreicht werden. Selbstverständlich ist alternativ auch ein Presssitz denkbar. Durch die Öffnung am Lagerrahmen oder an der Zylinderkopfhaube wird dann zumindest ein Eingriffselement in die Ringnut eingeschoben und damit ein Axiallager für die Nockenwelle gebildet. Vorteilhaft bei dem erfindungsgemäßen Verfahren ist, dass durch den zusätzlichen Wellenaxiallagerring außerhalb der Lageröffnungen und der nachträglichen Montage des Eingriffselements sich die Möglichkeit eröffnet, die Nockenwelle mit einem Axialversatz zum Lagerrahmen oder zur Zylinderkopfhaube zu fügen, wodurch zusätzlicher Platz gewonnen werden kann, welcher für die Greifeinrichtung (Bauteilauflagen, Fügegreifer) zur Verfügung steht.

Als Eingriffselement wird ein Stift verwendet. In der Öffnung wird zudem vor dem Eingriffselement eine diese aufnehmende Hülse angeordnet. Mittels einer Hülse kann auch ein Ölkanal zur Schmierung des Axiallagers gebildet werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Ansicht von unten auf eine erfindungsgemäße Zylinderkopfhaube bzw. einen erfindungsgemäßen Lagerrahmen,
- Fig. 2: eine Schnittdarstellung entlang der Schnittebene A-A aus Fig. 1,
- Fig. 3: eine Detaildarstellung eines in den Wellenaxiallagerring eingreifenden Eingriffselement,
- Fig. 4: eine Darstellung des Lagerrahmens bzw. der Zylinderkopfhaube von oben,
- Fig. 5: eine Darstellung wie in Fig. 4, jedoch von schräg unten.

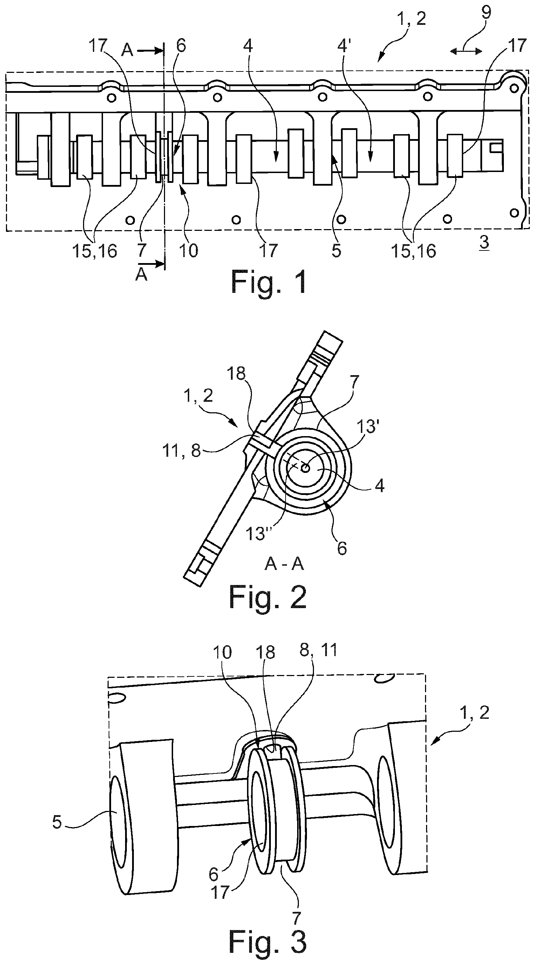

Entsprechend den Figuren 1 bis 5, weist ein erfindungsgemäßer Lagerrahmen 1 oder eine erfindungsgemäße Zylinderkopfhaube 2 einer Brennkraftmaschine 3 wenigstens eine darin gelagerte Nockenwelle 4 auf (vergleiche die Figuren 1 und 2), wobei die Nockenwelle 4 in zumindest zwei entlang einer Lagergasse angeordneten Lageröffnungen 5 tunnelgelagert ist. Die Lageröffnungen 5 umschließen dabei die Nockenwelle 4 vollständig. Erfindungsgemäß ist nun auf der Nockenwelle 4 zumindest ein Wellenaxiallagerring 6 (vergleiche insbesondere die Figuren 2 und 3) angeordnet, der eine zum Lagerrahmen 1 oder zur Zylinderkopfhaube 2 hin offene Ringnut 7 besitzt. Am Lagerrahmen 1 oder an der Zylinderkopfhaube 2 ist zumindest ein zugehöriges Eingriffselement 8 angeordnet, das in die Ringnut 7 eingreift und dadurch ein Axiallager 10 für die Nockenwelle 4 bildet. Mit der erfindungsgemäßen Axiallagerung der Nockenwelle 4 kann diese nicht nur zuverlässig in Axialrichtung 9 gelagert werden, sondern auch eine Montage eines derartigen Axiallagers 10 ist vergleichsweise einfach möglich, da die Nockenwelle 4 zunächst in gewohnter Weise durch die Lageröffnungen 5 des Lagerrahmens 1 oder der Zylinderkopfhaube 2 hindurch gefahren werden kann, bis die Ringnut 7 des Wellenaxiallagerrings 6 in Radialrichtung fluchtend zum Eingriffselement 8 ausgerichtet ist. Anschließend kann das Eingriffselement 8 durch den Lagerrahmen 1 bzw. die Zylinderkopfhaube 2 in die Ringnut 7 eingesteckt und dadurch das Axiallager 10 montiert werden.

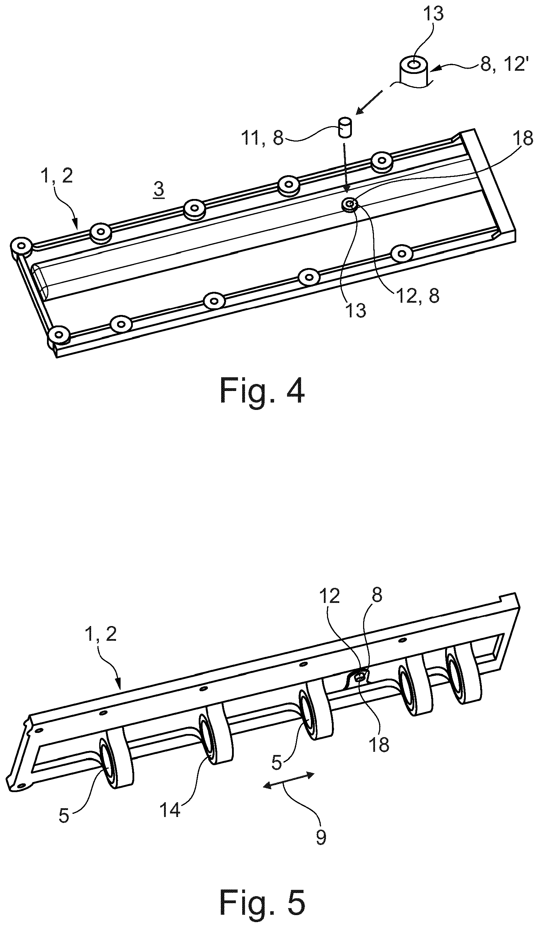

Das Eingriffselement 8 kann beispielsweise als Stift 11 oder als Schwert ausgebildet sein. Insbesondere die Ausbildung des Eingriffselements 8 als Stift 11 bietet den großen Vorteil, dass im Lagerrahmen 1 oder in der Zylinderkopfhaube 2 zusätzlich eine den Stift 11 aufnehmende Hülse 12 angeordnet sein kann, die den Stift 11 zuverlässig führt und fixiert. Eine derartige Hülse 12 kann beispielsweise bei einem Lagerrahmen 1 bzw. einer Zylinderkopfhaube 2 aus Kunststoff sinnvoll sein, da dadurch eventuell auftretende Kriechverformungen minimiert werden können. Ist der Lagerrahmen 1 bzw. die Zylinderkopfhaube 2 aus Metall, beispielsweise aus Aluminium, ausgebildet, so kann eine derartige Hülse 12 auch entfallen. Die Ausbildung des Lagerrahmens 1 bzw. der Zylinderkopfhaube 2 aus Kunststoff bietet dabei den großen Vorteil, dass diese nicht nur leicht und damit gewichtsoptimiert, sondern auch qualitativ hochwertig und kostengünstig ausgebildet werden kann. Bei einer Ausbildung des Lagerrahmens 1 bzw. der Zylinderkopfhaube 2 aus Aluminium kann ebenfalls eine gewichtsoptimierte Bauweise erreicht und zusätzlich beispielsweise auf die Hülse 12 verzichtet werden, da die aus Metall ausgebildete Zylinderkopfhaube 2 bzw. der aus Metall ausgebildete Lagerrahmen 1 dem Eingriffselement 8 genügend Halt bietet.
Bei einer weiteren vorteilhaften Ausführungsform der erfindungsgemäßen Lösung kann das Eingriffselement 8 einen Ölkanal 13 aufweisen, über welchen durch den Lagerrahmen 1 bzw. die Zylinderkopfhaube 2 dem Axiallager 10 Öl zuführbar ist. In diesem Fall ist es beispielsweise denkbar, dass das Eingriffselement 8 als Hülse 12' ausgebildet ist, wie dies gemäß der Figur 4 angedeutet ist. Zusätzlich oder alternativ ist selbstverständlich auch denkbar, dass eine Schmierung der Ringnut 7 des Wellenaxiallagerrings 6 über die Nockenwelle 4 erfolgt, wobei hierzu ein Ölkanal 13' (vergleiche Figur 2) in der Nockenwelle 4 verläuft sowie ein radial dazu angeordneter Ölkanal 13" in der Nockenwelle 4 und im Wellenaxiallagerring 6. Beide Ausführungsformen der Ölschmierung des Axiallagers 10 ermöglichen dabei eine Reibungsreduzierung und dadurch eine besonders leichtgängige Lagerung.

In Radialrichtung kann die Nockenwelle 4 über zumindest ein zusätzliches Gleitlager 14 gelagert sein, wobei die Radiallagerung üblicherweise in den Lageröffnungen 5 erfolgt. Das Eingriffselement 8 und/oder der Wellenaxiallagerring 6 können beispielsweise aus einem die Reibung reduzierenden Material ausgebildet sein oder aber eine die Reibung reduzierende Beschichtung aufweisen, um eine möglichst leichtgängige Lagerung zu unterstützen.

Generell kann mit dem erfindungsgemäßen Lagerrahmen 1 oder der erfindungsgemäßen Zylinderkopfhaube 2 eine einfach zu montierende und zugleich effektive Axiallagerung der Nockenwelle 4 erreicht werden, ohne dass hierfür bislang erforderliche Axiallagerscheiben, insbesondere Anlaufscheiben, erforderlich sind.

Die vorliegende Erfindung betrifft zudem ein Verfahren zur Montage einer gebauten Nockenwelle 4' in einem Lagerrahmen 1 oder einer Zylinderkopfhaube 2 entsprechend der vorherigen Absätze, bei dem mittels einer nicht gezeigten Haltevorrichtung der Lagerrahmen 1 oder die Zylinderkopfhaube 2 gehalten wird, und mittels einer ebenfalls nicht gezeigten Greifeinrichtung zu montierende Funktionselemente 15, wie beispielsweise Nocken 16, und der Wellenaxiallagerring 6 gegriffen und mit ihren Durchgangsöffnungen 17 koaxial zu entlang einer Lagergasse angeordneten Lageröffnungen 5 des Lagerrahmens 1 oder der Zylinderkopfhaube 2 angeordnet werden. Die Nockenwelle 4 wird anschließend durch die Lageröffnungen 5 des Lagerrahmens 1 oder der Zylinderkopfhaube 2 und die Durchgangsöffnungen 17 der Funktionselemente 15 und des Wellenaxiallagerrings 6 geschoben, wobei der Wellenaxiallagerring 6 eine zum Lagerrahmen 1 oder zur Zylinderkopfhaube 2 hin offene Ringnut 7 aufweist, und so auf der Nockenwelle 4 positioniert wird, dass die Ringnut 7 im Wesentlichen in Radialrichtung mit einer Öffnung 18 am Lagerrahmen 1 oder an der Zylinderkopfhaube 2 fluchtet. Durch die Öffnung 18 am Lagerrahmen 1 oder an der Zylinderkopfhaube 2 wird nun zumindest ein Eingriffselement 8 in die Ringnut 7 eingeschoben und damit ein Axiallager 10 für die Nockenwelle 4 gebildet.

Generell kann als Eingriffselement 8 ein Stift 11 oder ein Schwert verwendet werden. In der Öffnung 18 kann zudem vor dem Eingriffselement 8 eine diese aufnehmende Hülse 12 angeordnet werden. Mittels einer Hülse 12' kann auch ein Ölkanal 13 zur Schmierung des Axiallagers 10 gebildet werden. Nach dem Fügen der Funktionselemente 15 und des Wellenaxiallagerrings 6 wird die gebaute Nockenwelle 4' in Axialrichtung derselben derart ausgerichtet, dass die Ringnut 7 in Radialrichtung mit der Öffnung 18 am Lagerrahmen 1 oder an der Zylinderkopfhaube 2 fluchtet.

Vorteilhaft bei dem erfindungsgemäßen Verfahren ist, dass durch den zusätzlichen Wellenaxiallagerring 6 außerhalb der Lageröffnungen 5 und der nachträglichen Montage des Eingriffselements 8, beispielsweise des Stiftes 11 oder des Schwerts, sich die Möglichkeit eröffnet, die Nockenwelle 4 mit einem Axialversatz zum Lagerrahmen 1 oder zur Zylinderkopfhaube 2 zu fügen. Dadurch kann zusätzlicher Platz gewonnen werden, welcher für die Greifeinrichtung (Bauteilauflagen, Fügegreifer) genutzt werden kann, um diese robuster ausführen zu können.

## Patentansprüche

1. Lagerrahmen (1) oder Zylinderkopfhaube (2) einer Brennkraftmaschine (2) mit wenigstens einer darin gelagerten Nockenwelle (4), die in zumindest zwei entlang einer Lagergasse angeordneten Lageröffnungen (5) tunnelgelagert ist, die die Nockenwelle (4) und/oder ein Radiallager vollständig umschließen, wobei zumindest ein Wellenaxiallagerring (6) auf der Nockenwelle (4) angeordnet ist, wobei
- der Wellenaxiallagerring (6) eine zum Lagerrahmen (1) oder zur Zylinderkopfhaube (2) hin offene Ringnut (7) aufweist,
- am Lagerrahmen (1) oder an der Zylinderkopfhaube (2) zumindest ein Eingriffselement (8) angeordnet ist, das in die Ringnut (7) eingreift und ein Axiallager (10) für die Nockenwelle (4) bildet,
- das Eingriffselement (8) als Stift (11) ausgebildet ist und in dem Lagerrahmen (1) oder in der Zylinderkopfhaube (2) in einer den Stift (11) aufnehmenden Hülse (12), angeordnet ist,
- der Lagerrahmen (1) oder die Zylinderkopfhaube (2) aus Kunststoff ausgebildet sind,
- am Lagerrahmen (1) oder an der Zylinderkopfhaube (2) eine Öffnung (18) vorgesehen ist, durch welche das zumindest eine Eingriffselement (8) in die Ringnut (7) eingeschoben ist.

2. Lagerrahmen oder Zylinderkopfhaube nach Anspruch 1,
**dadurch gekennzeichnet,**
**dass** das Eingriffselement (8) einen Ölkanal (13) aufweist, über welchen dem Axiallager (10) durch den Lagerrahmen (1) oder die Zylinderkopfhaube (2) Öl zuführbar ist.

3. Lagerrahmen oder Zylinderkopfhaube nach Anspruch 2,
**dadurch gekennzeichnet,**
**dass** das Eingriffselement (8) als Hülse (12') ausgebildet ist und dadurch den Ölkanal (13) bildet.

4. Lagerrahmen oder Zylinderkopfhaube nach einem der Ansprüche 1 bis 3,
**dadurch gekennzeichnet,**
**dass** eine Ölzuführung zur Schmierung des Wellenaxiallagerrings (6) über die Nockenwelle (4) erfolgt, wozu in der Nockenwelle (4) ein Ölkanal (13') vorgesehen ist.

5. Lagerrahmen oder Zylinderkopfhaube nach einem der Ansprüche 1 bis 4,
**dadurch gekennzeichnet,**
**dass** die Nockenwelle (4) in Radialrichtung über zumindest ein zusätzliches Gleitlager (14) gelagert ist.

6. Brennkraftmaschine (3) mit einem Lagerrahmen (1) oder einer Zylinderkopfhaube (2) nach einem der Ansprüche 1 bis 5.

7. Verfahren zur Montage einer gebauten Nockenwelle (4') in einem Lagerrahmen (1) oder einer Zylinderkopfhaube (2) aus Kunststoff nach einem der Ansprüche 1 bis 5, bei dem
- mittels einer Haltevorrichtung ein Lagerrahmen (1) oder eine Zylinderkopfhaube (2) gehalten wird,
- mittels einer Greifeinrichtung zu montierende Funktionselemente (15), wie Nocken (16), und ein Wellenaxiallagerring (6) gegriffen und mit ihren Durchgangsöffnungen (17) koaxial zu entlang einer Lagergasse angeordneten Lageröffnungen (5) des Lagerrahmens (1) oder der Zylinderkopfhaube (2) angeordnet werden,
- die Nockenwelle (4) durch die Lageröffnungen (5) und die Durchgangsöffnungen (17) der Funktionselemente (15) und des Wellenaxiallagerrings (6) geschoben wird,
- der Wellenaxiallagerring (6) eine zum Lagerrahmen (1) oder zur Zylinderkopfhaube (2) hin offene Ringnut (7) aufweist, und so auf der Nockenwelle (4) positioniert wird, dass die Ringnut (7) im Wesentlichen in Radialrichtung mit einer Öffnung (18) am Lagerrahmen (1) oder an der Zylinderkopfhaube (2) fluchtet,
- durch die Öffnung (18) am Lagerrahmen (1) oder an der Zylinderkopfhaube (2) zumindest ein Eingriffselement (8) in die Ringnut (7) eingeschoben wird und ein Axiallager (10) für die Nockenwelle (4) bildet,
- in der Öffnung (18) vor dem Eingriffselement (8) eine diese aufnehmende Hülse (12) angeordnet wird.

8. Verfahren nach Anspruch 7,
**dadurch gekennzeichnet,**
**dass** als Eingriffselement (8) ein Stift (11) verwendet wird.

## Claims

1. Bearing frame (1) or cylinder head cover (2) for an internal combustion engine (2) having at least one camshaft (4) mounted therein, which is tunnel-mounted in at least two bearing openings (5) arranged along a bearing channel, which bearing openings completely enclose the camshaft (4) and/or a radial bearing, wherein at least one shaft axial bearing ring (6) is arranged on the camshaft (4), wherein
- the shaft axle bearing ring (6) has an annular groove (7) open towards the bearing frame (1) or towards the cylinder head cover (2),
- on the bearing frame (1) or on the cylinder head cover (2) is arranged at least one engaging element (8) which engages into the annular groove (7) and forms an axial bearing (10) for the camshaft (4),
- the engaging element (8) is in the form of a pin (11) and is arranged in the bearing frame (1) or in the cylinder head cover (2) in a sheath (12) receiving the pin (11),
- the bearing frame (1) or the cylinder head cover (2) are made of plastic,
- on the bearing frame (1) or on the cylinder head cover (2) is provided an opening (18) through which the at least one engaging element (8) is inserted into the annular groove (7).

2. Bearing frame or cylinder head cover according to claim 1,
**characterised in**
**that** the engaging element (8) has an oil channel (13) via which oil can be supplied to the axial bearing (10) through the bearing frame (1) or the cylinder head cover (2).

3. Bearing frame or cylinder head cover according to claim 2,
**characterised in**
**that** the engaging element (8) is in the form of a sheath (12') and thereby forms the oil channel (13).

4. Bearing frame or cylinder head cover according to any of claims 1 to 3,
**characterised in**
**that** an oil supply for lubricating the shaft axle bearing ring (6) is implemented via the camshaft (4) to which end an oil channel (13') is provided in the camshaft (4).

5. Bearing frame or cylinder head cover according to any of claims 1 to 4,
**characterised in**
**that** the camshaft (4) is mounted in radial direction via at least one additional slide bearing (14).

6. Internal combustion engine (3) having a bearing frame (1) or a cylinder head cover (2) according to any of claims 1 to 5.

7. Method for installing a built camshaft (4') in a bearing frame (1) or a cylinder head cover (2) of plastic according to any of claims 1 to 5, in which
- a bearing frame (1) for a cylinder head cover (2) is held by means of a holding device,
- by means of a gripping device, functional elements (15) to be installed, such as cams (16), and a shaft axial bearing ring (6) are gripped and are arranged with their through openings (17) coaxially to bearing openings (5), arranged along a bearing channel, of the bearing frame (1) or of the cylinder head cover (2),
- the camshaft (4) is inserted through the bearing openings (5) and the through openings (17) of the functional elements (15) and of the shaft axial bearing ring (6),
- the shaft axial bearing ring (6) has an annular groove (7) open towards the bearing frame (1) or towards the cylinder head cover (2) and is positioned on the camshaft (4) such that the annular groove (7) is substantially aligned in radial direction with an opening (18) on the bearing frame (1) or on the cylinder head cover (2),
- at least one engaging element (8) is inserted through the opening (18) on the bearing frame (1) or on the cylinder head cover (2) into the annular groove (7) and forms an axial bearing (10) for the camshaft (4),
- in the opening (18) prior to the engaging element (8) is arranged a sheath (12) receiving this.

8. Method according to claim 7,
**characterised in**
**that** a pin (11) is used as an engaging element (8).

## Revendications

1. Cadre de palier (1) ou couvercle de tête de cylindre (2) d'un moteur à combustion interne (2) avec au moins un arbre à cames (4) logé dedans qui est logé en tunnel dans au moins deux ouvertures de palier (5) agencées le long d'une allée de palier qui entourent complètement l'arbre à cames (4) et/ou un palier radial, dans lequel au moins un anneau de palier axial d'arbre (6) est agencé sur l'arbre à cames (4),
dans lequel
- l'anneau de palier axial d'arbre (6) présente une rainure annulaire (7) ouverte vers le cadre de palier (1) ou vers le couvercle de tête de cylindre (2),
- au moins un élément de mise en prise (8) est agencé au niveau du cadre de palier (1) ou au niveau du couvercle de tête de cylindre (2), lequel se met en prise dans la rainure annulaire (7) et forme un palier axial (10) pour l'arbre à cames (4),
- l'élément de mise en prise (8) est réalisé comme tige et est agencé dans le cadre de palier (1) ou dans le couvercle de tête de cylindre (2) dans une douille (12) recevant la tige (11),
- le cadre de palier (1) ou le couvercle de tête de cylindre (2) est réalisé en matière plastique,
- une ouverture (18) est prévue au niveau du cadre de palier (1) ou au niveau du couvercle de tête de cylindre (2), par laquelle l'au moins un élément de mise en prise (8) est enfoncé dans la rainure annulaire (7).

2. Cadre de palier ou couvercle de tête de cylindre selon la revendication 1,
**caractérisé en ce**
**que** l'élément de mise en prise (8) présente un canal pour huile (13) par lequel de l'huile peut être amenée au palier axial (10) par le cadre de palier (1) ou le couvercle de tête de cylindre (2).

3. Cadre de palier ou couvercle de tête de cylindre selon la revendication 2,
**caractérisé en ce**
**que** l'élément de mise en prise (8) est réalisé comme douille (12') et forme ainsi le canal pour huile (13).

4. Cadre de palier ou couvercle de tête de cylindre selon l'une des revendications 1 à 3,
**caractérisé en ce**
**qu'**une amenée d'huile est effectuée pour la lubrification de l'anneau de palier axial d'arbre (6) par le biais de l'arbre à cames (4), pour quoi un canal pour huile (13') est prévu dans l'arbre à cames (4).

5. Cadre de palier ou couvercle de tête de cylindre selon l'une des revendications 1 à 4,
**caractérisé en ce**
**que** l'arbre à cames (4) est logé dans le sens radial sur au moins un palier à glissement (14) supplémentaire.

6. Moteur à combustion interne (3) avec un cadre de palier (1) ou un couvercle de tête de cylindre (2) selon l'une des revendications 1 à 5.

7. Procédé de montage d'un arbre à cames (4') construit dans un cadre de palier (1) ou un couvercle de tête de cylindre (2) en matière plastique selon l'une des revendications 1 à 5, pour lequel
- un cadre de palier (1) ou un couvercle de tête de cylindre (2) est maintenu au moyen d'un dispositif de retenue,
- des éléments fonctionnels (15) à monter au moyen d'un dispositif de préhension, tels que des cames (16), et un anneau de palier axial d'arbre (6) sont saisis et sont agencés avec leurs ouvertures de passage (17) coaxialement aux ouvertures de palier (5) agencées le long d'une allée de palier du cadre de palier (1) ou du couvercle de tête de cylindre (2),
- l'arbre à cames (4) est poussé à travers les ouvertures de palier (5) et les ouvertures de passage (17) des éléments fonctionnels (15) et de l'anneau de palier axial d'arbre (6),
- l'anneau de palier axial d'arbre (6) présente une rainure annulaire (7) ouverte vers le cadre de palier (1) ou vers le couvercle de tête de cylindre (2), et est positionné sur l'arbre à cames (4) de sorte que la rainure annulaire (7) s'aligne sensiblement dans le sens radial sur une ouverture (18) au niveau du cadre de palier (1) ou au niveau du couvercle de tête de cylindre (2),
- au moins un élément de mise en prise (8) est enfoncé dans la rainure annulaire (7) à travers l'ouverture (18) au niveau du cadre de palier (1) ou au niveau du couvercle de tête de cylindre (2) et forme un palier axial (10) pour l'arbre à cames (4),
- une douille (12) recevant celui-ci est agencée dans l'ouverture (18) avant l'élément de mise en prise (8).

8. Procédé selon la revendication 7,
**caractérisé en ce**
**qu'**une tige (11) est utilisée comme élément de mise en prise (8).
